# EUROPEAN PATENT APPLICATION

(11) **EP 4 451 409 A1**
(43) Date of publication of application: **23.10.2024**
(21) Application number: 21968542.7
(22) Date of filing: 22.12.2021
(51) Int. Cl.: H01M 10/0587, H01M 4/13

(54) **ELECTROCHEMICAL APPARATUS, BATTERY MODULE AND ELECTRIC APPARATUS**

(71) Applicant: Ningde Amperex Technology Limited, Ningde, Fujian 352100 (CN)
(72) Inventor: ZHANG, Sen, Ningde, Fujian 352100 (CN); DAI, Zhifang, Ningde, Fujian 352100 (CN); LONG, Hai, Ningde, Fujian 352100 (CN); ZHANG, Qingwen, Ningde, Fujian 352100 (CN)
(74) Representative: Icosa
(86) International application number: PCT/CN2021/140514
(87) International publication number: WO 2023/115393

(57) **Abstract**

This application relates to the technical field of energy storage, and in particular, discloses an electrochemical device, a battery module, and an electrical device. The electrochemical device includes an electrode assembly. The electrode assembly includes a first electrode plate, a second electrode plate, and a separator. A plurality of first tabs are disposed on the first electrode plate. The separator is disposed between the first electrode plate and the second electrode plate. The first electrode plate, the separator, and the second electrode plate are stacked and wound. The plurality of first tabs are connected to a region of the first electrode plate other than first inner layers and first outer layers. The first inner layers include N layers starting from a start layer of the first electrode plate along a direction from the start layer to an end layer of the first electrode plate. The first outer layers include M layers starting from the end layer of the first electrode plate along a direction from the end layer to the start layer of the first electrode plate, where M ≥ 1, and N ≥ 3. In this way, this application alleviates problems such as lithium plating of the battery.

## Description

### TECHNICAL FIELD

This application relates to the technical field of energy storage, and in particular, to an electrochemical device, a battery module, and an electrical device.

### BACKGROUND

By virtue of a high specific energy, reusability for a large number of cycles, a long storage time, and other advantages, lithium-ion batteries are widely used not only in portable electronic devices such as mobile phones, digital cameras, and laptop computers, but also in large and medium-sized electrical devices such as electric vehicles, electric bicycles, and electric tools.

During charging and discharging of a lithium-ion battery, Li⁺ ions are shuttled between a positive electrode and a negative electrode by intercalation and deintercalation. During charging, Li⁺ ions are deintercalated from the positive electrode and intercalated into the negative electrode through an electrolyte. The negative electrode is in a lithium-rich state. During discharging, the contrary applies.

In a process of implementing this application, the applicant hereof finds that, in the field of new energy vehicles, a higher energy density, higher C-rate performance, a long life, and safety have imposed higher requirements on the lithium-ion batteries. With the increase of the energy density, the size of the battery increases, and a single tab serving as a terminal for inputting and outputting electrical energy between the battery and an external device can hardly meet the higher C-rate performance requirement. Therefore, a multi-tab structure is introduced. However, with the design of the multi-tab structure, at a later stage of long-term cycling of the battery, lithium plating is prone to occur inside the battery after the electrolyte solution is depleted, thereby resulting in a lifespan decline and safety hazards, and hindering widespread popularization.

### SUMMARY

In view of the above problems, some embodiments of this application provide an electrochemical device, a battery module, and an electrical device to alleviate the problems such as lithium plating of the battery.

According to one aspect of some embodiments of this application, an electrochemical device is provided. The electrochemical device includes an electrode assembly. The electrode assembly includes a first electrode plate, a second electrode plate, and a separator. A plurality of first tabs are disposed on the first electrode plate. The separator is disposed between the first electrode plate and the second electrode plate. The first electrode plate, the separator, and the second electrode plate are stacked and wound. In addition, the plurality of first tabs are connected to a region of the first electrode plate other than first inner layers and first outer layers. The first inner layers include N layers starting from a start layer of the first electrode plate along a direction from the start layer to an end layer of the first electrode plate. The first outer layers include M layers starting from the end layer of the first electrode plate along a direction from the end layer to the start layer of the first electrode plate, where M ≥ 1, and N ≥ 3. By setting the distribution positions of the first tabs, the electromotive force at the first inner layers and the first outer layers of the first electrode plate is reduced during charging and discharging of the electrochemical device, and the speed of lithiation at a local region is reduced, thereby alleviating lithium plating of the battery.

In an optional manner, the first electrode plate includes a first current collector. The plurality of first tabs are formed by extending the first current collector from one side. The plurality of first tabs and the first current collector are formed in one piece. This arrangement facilitates the flow of a current between the first tab and the first current collector, and improves the distribution of the current density.

In an optional manner, a plurality of second tabs are disposed on the second electrode plate. The plurality of second tabs are connected to a region of the second electrode plate other than second inner layers and second outer layers. The second inner layers include K layers starting from a start layer of the second electrode plate along a direction from the start layer to an end layer of the second electrode plate, and the second outer layers include L layers starting from the end layer of the second electrode plate along a direction from the end layer to the start layer of the second electrode plate, where L ≥ 1, and K ≥ 3. By setting the distribution positions of the second tabs, the electromotive force at the second inner layers and the second outer layers of the second electrode plate is reduced during charging and discharging of the electrochemical device, and the speed of lithiation at a local region is reduced, thereby alleviating lithium plating of the battery.

In an optional manner, the second electrode plate includes a second current collector, the plurality of second tabs are formed by extending the second current collector from one side, and the plurality of second tabs and the second current collector are formed in one piece. This arrangement facilitates the flow of a current between the second tab and the second current collector, and improves the distribution of the current density.

In an optional manner, the first inner layers satisfy the following condition: 3 ≤ N ≤ 0.6A, where N is an integer, and A is a total number of layers of the first electrode plate.

In an optional manner, the first outer layers satisfy the following condition: 1 ≤ M ≤ 0.6*A*, where M is an integer, and *A* is a total number of layers of the first electrode plate.

In an optional manner, at least one first tab is connected to each layer among the layers of the first electrode plate other than the first inner layers and the first outer layers.

In an optional manner, a number of first tabs connected to each layer among the layers of the first electrode plate other than the first inner layers and the first outer layers is not greater than 5. For example, the number of first tabs in each layer may be 1, 2, 3, 4, or 5.

In an optional manner, a total number of layers *A* of the first electrode plate is 5 to 80.

In an optional manner, the second inner layers satisfy the following condition: 3 ≤ K ≤ 0.6*B*, where K is an integer, and *B* is a total number of layers of the second electrode plate.

In an optional manner, the first outer layers satisfy the following condition: 1 ≤ L ≤ 0.6*B*, where L is an integer, and *B* is a total number of layers of the second electrode plate.

In an optional manner, at least one second tab is connected to each layer among the layers of the second electrode plate other than the second inner layers and the second outer layers.

In an optional manner, a number of second tabs connected to each layer among the layers of the second electrode plate other than the second inner layers and the second outer layers is not greater than 5. For example, the number of second tabs in each layer may be 1, 2, 3, 4, or 5.

In an optional manner, a total number of layers B of the second electrode plate is 5 to 80.

According to another aspect of some embodiments of this application, a battery module is provided. The battery module includes the electrochemical device disclosed above.

According to another aspect of some embodiments of this application, an electrical device is provided. The electrical device includes the battery module disclosed above.

The beneficial effects of some embodiments of this application are as follows: Different from the design in the prior art, an electrode assembly is disposed according to some embodiments of this application, and the electrode assembly includes a first electrode plate, a second electrode plate, and a separator; a plurality of first tabs are disposed on the first electrode plate; the separator is disposed between the first electrode plate and the second electrode plate; and the first electrode plate, the separator, and the second electrode plate are stacked and wound. In addition, the plurality of first tabs are connected to a region of the first electrode plate other than first inner layers and first outer layers; the first inner layers include N layers starting from a start layer of the first electrode plate along a direction from the start layer to an end layer of the first electrode plate; and the first outer layers include M layers starting from the end layer of the first electrode plate along a direction from the end layer to the start layer of the first electrode plate, where M ≥ 1 , and N ≥ 3. By setting the distribution positions of the plurality of first tabs, the electromotive force at the first inner layers and the first outer layers of the first electrode plate is reduced during charging and discharging of the electrochemical device, and the speed of lithiation at a local region is reduced, thereby alleviating lithium plating of the battery.

### BRIEF DESCRIPTION OF DRAWINGS

To describe the technical solutions in the specific embodiments of this application or the prior art more clearly, the following outlines the drawings that need to be used in the descriptions of the specific embodiments of this application or the prior art. In all the drawings, similar elements or parts are generally identified by similar reference numerals. The elements or parts in the drawings are not necessarily drawn to scale.
FIG. 1 is a schematic structural diagram of an electrochemical device according to an embodiment of this application;
FIG. 2 is a cross-sectional view obtained by sectioning along an A-A line shown in FIG. 1;
FIG. 3 is a schematic structural diagram of a first electrode plate of an electrochemical device according to an embodiment of this application;
FIG. 4 is a cross-sectional side view of a first electrode plate of an electrochemical device according to an embodiment of this application;
FIG. 5 is a cross-sectional view of an electrochemical device according to an embodiment of this application;
FIG. 6 is a cross-sectional view of an electrochemical device according to another embodiment of this application;
FIG. 7 is a schematic structural diagram of a second electrode plate of an electrochemical device according to an embodiment of this application;
FIG. 8 is a cross-sectional side view of a second electrode plate of an electrochemical device according to an embodiment of this application;
FIG. 9 is a cross-sectional view of an electrochemical device according to still another embodiment of this application; and
FIG. 10 is a cross-sectional view of an electrochemical device according to still another embodiment of this application.

### DETAILED DESCRIPTION OF EMBODIMENTS

For ease of understanding this application, the following describes this application in more detail with reference to drawings and specific embodiments. It is hereby noted that an element referred to herein as being "fixed to" another element may be directly disposed on the other element, or may be fixed to the other element with one or more elements in between. An element referred to herein as "connected to" another element may be connected to the other element directly or with one or more elements in between. The terms "vertical", "horizontal", "left", "right", and other similar expressions used herein are merely for ease of description.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein is intended to include any and all combinations of one or more relevant items recited.

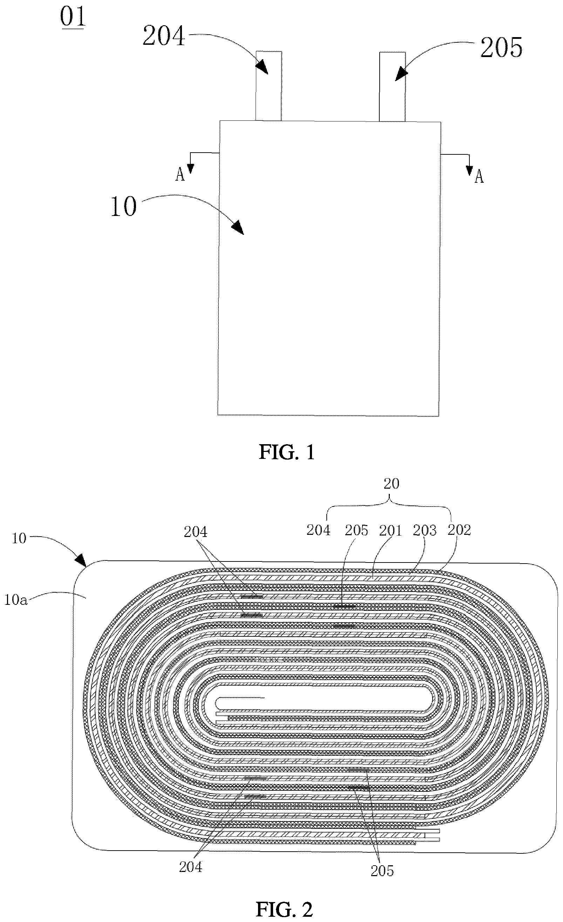

Referring to FIG. 1 and FIG. 2, the electrochemical device 01 includes a housing 10 and an electrode assembly 20. The electrode assembly 20 is disposed in the housing 10. The electrode assembly 20 is a jelly-roll structure.

With respect to the housing 10, as shown in FIG. 1 and FIG. 2, the housing 10 assumes a flat cuboid shape as a whole. An accommodation cavity 10a is formed in the housing. The accommodation cavity 10a is configured to accommodate the electrode assembly 20 and an electrolyte solution. In this embodiment, the electrochemical device is a pouch cell, and the housing 10 is made of an aluminum laminated film. Understandably, in some other embodiments of this application, the electrochemical device may be a hard-shell battery instead. Accordingly, the housing 10 is a metal shell.

With respect to the electrode assembly 20, as shown in FIG. 2, the electrode assembly is accommodated in the accommodation cavity 10a. The electrode assembly 20 includes a first electrode plate 201, a second electrode plate 202, and a separator 203. A plurality of first tabs 204 are disposed on the first electrode plate 201. The first electrode plate 201 and the second electrode plate 202 are of opposite polarities and are spaced apart. Of the two electrode plates, one is a positive electrode plate and the other is a negative electrode plate. The separator 203 is disposed between the two electrode plates and is configured to separate one electrode plate from the other. The first tab 204 is formed by extending the first electrode plate 201 from one side. One end, away from the first electrode plate 201, of the first tab 204 protrudes out of the housing 10. The first electrode plate 201, the second electrode plate 202, and the separator 203 are stacked and wound into a columnar structure with an oblong or elliptical cross-section so as to be accommodated in the accommodation cavity 10a. Further, the housing 10 is filled with an electrolyte solution. The electrode assembly 20 is infiltrated by the electrolyte solution. The electrolyte solution is configured to provide an environment for conducting lithium ions, and enable the lithium ions to be intercalated into the first electrode plate 201 or the second electrode plate 202 at appropriate time, thereby implementing the charge-discharge process of the electrochemical device.

A plurality of second tabs 205 are disposed on the second electrode plate 202. The second tab 205 is formed by extending the second electrode plate 202 from one side. One end, away from the second electrode plate 202, of the second tab 205 protrudes out of the housing 10.

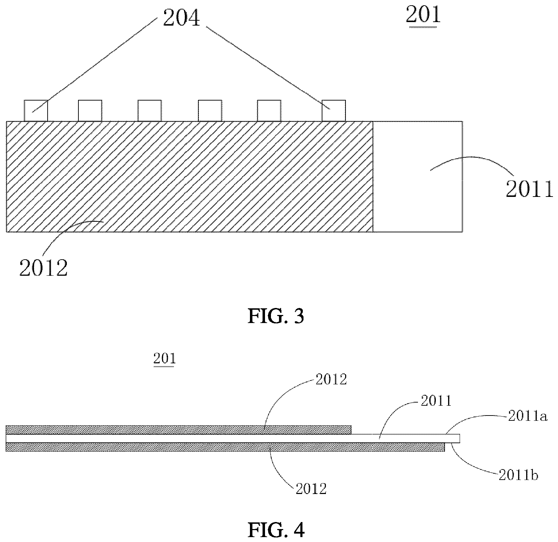

In some embodiments, as shown in FIG. 3 to FIG. 4, the first electrode plate 201 includes a first current collector 2011 and a first active material layer 2012. The first active material layer 2012 is disposed on the first current collector 2011. The plurality of first tabs 204 are formed by extending the first current collector 2011 from one side, and the plurality of first tabs 204 and the first current collector 2011 are formed in one piece. It is hereby noted that the first current collector 2011 includes a first surface 2011a and a second surface 2011b. The first active material layer 2012 may be applied onto the first surface 2011a and/or the second surface 2011b. A part of the first surface 2011a or the second surface 2011b of the first current collector 2011, which is not coated with the first active material layer 2012 in a way symmetrical to the other surface, is referred to as a single-side-coated first electrode plate 201. For example, a section of the first surface 2011a is not coated with the first active material layer 2012, and the second surface 2011b symmetrical to the section is coated with the first active material layer 2012, and therefore, this section of the first current collector 2011 is a single-side-coated first electrode plate 201. A part of the first surface 2011a or the second surface 2011b of the first current collector 2011, which is coated with the first active material layer 2012 in a way symmetrical to the other surface, is referred to as a double-side-coated first electrode plate 201. In some embodiments, the single-side-coated first electrode plate 201 is typically disposed at a winding start layer and/or a winding end layer of the electrode assembly 20.

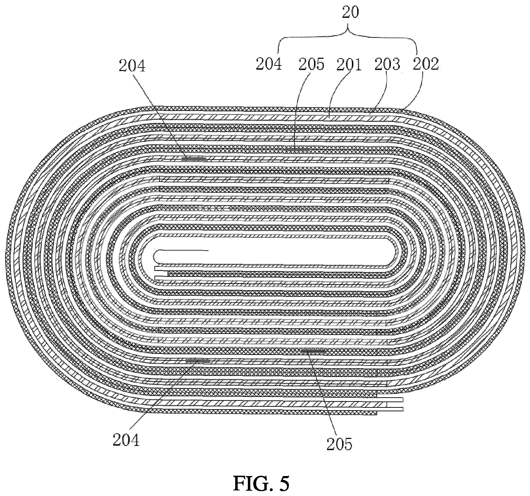

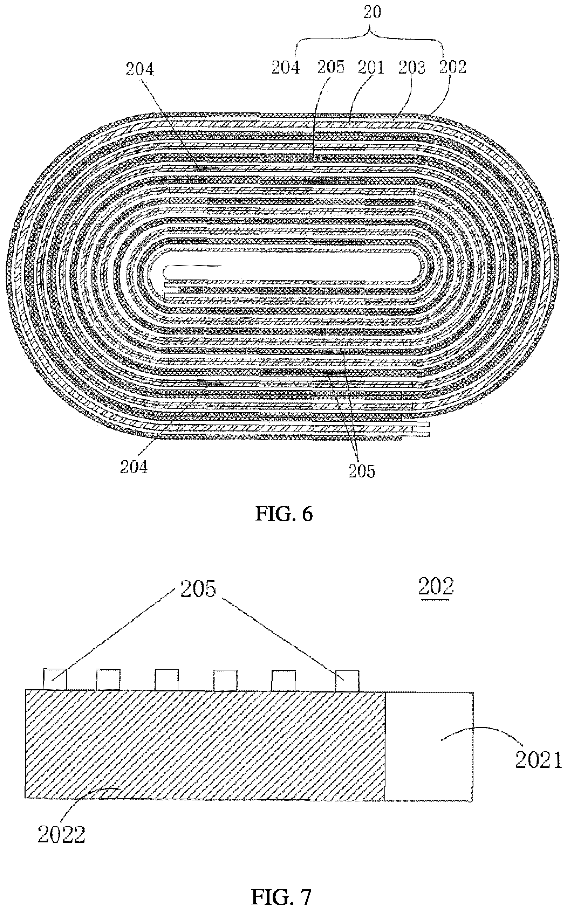

In some embodiments, as shown in FIG. 5 and FIG. 6, the first electrode plate 201 includes first inner layers (not shown) and first outer layers (not shown). The first inner layers include N layers starting from a start layer of the first electrode plate 201 along a direction from the start layer to an end layer of the first electrode plate 201. The first outer layers include M layers starting from the end layer of the first electrode plate 201 along a direction from the end layer to the start layer of the first electrode plate 201, where M ≥ 1, and N ≥ 3.

In some embodiments, the first inner layers satisfy the following condition: 3 ≤ N ≤ 0.6*A*, where N is an integer, and *A* is the total number of layers of the first electrode plate 201. For example, when *A* = 15, 3 ≤ N ≤ 9 . In other words, in the direction from the start layer to the end layer of the first electrode plate 201, the first tab 204 is not disposed on at least 3 layers and at most 9 layers of the first electrode plate 201. If the value of N is equal to 5, then the first tab 204 is not disposed on the 1^{st} layer to the 5^{th} layer of the first electrode plate 201 in the direction from the start layer to the end layer of the first electrode plate 201.

In some embodiments, the first outer layers satisfy the following condition: 1 ≤ M ≤ 0.6*A*, where M is an integer, and *A* is the total number of layers of the first electrode plate 201. For example, when *A* = 15, 1 ≤ M ≤ 9 . In other words, in the direction from the end layer to the start layer of the first electrode plate 201, the first tab 204 is not disposed on at least 1 layer and at most 9 layers of the first electrode plate 201. If the value of M is equal to 3, then the first tab 204 is not disposed on the 1^{st} layer (outermost layer) to the 3^{rd} layer of the first electrode plate 201 in the direction from the end layer to the start layer of the first electrode plate 201.

In some embodiments, the total number of layers A of the first electrode plate 201 is 5 to 80.

It is hereby noted that the electrode assembly in this embodiment is a jelly-roll structure. In defining the total number of layers A of the first electrode plate 201, a layer from the first straight section unwound and located innermost in the electrode assembly to a midpoint of the first bend of the first electrode plate 201 is considered as a first fold of the first electrode plate and defined as a start layer of the first electrode plate 201; and, along the winding direction, a layer from the midpoint of the first bend to the midpoint of the second bend is considered as a second fold of the first electrode plate and defined as a second layer of the first electrode plate. In other words, each bend formed by the first electrode plate 201 makes the total number of layers of the first electrode plate 201 increase by 1. For other layers, the arrangement is deduced similarly.

For the second electrode plate 202, in some embodiments, as shown in FIG. 7 to FIG. 8, the second electrode plate 202 includes a second current collector 2021 and a second active material layer 2022. The second active material layer 2022 is disposed on the second current collector 2021. The plurality of second tabs 205 are formed by extending the second current collector 2021 from one side, and the plurality of second tabs 205 and the second current collector 2021 are formed in one piece. It is hereby noted that the second current collector 2021 includes a third surface 2021a and a fourth surface 2021b. The second active material layer 2022 may be applied onto the third surface 2021a and/or the fourth surface 2021b. A part of the third surface 2021a or the fourth surface 2021b of the second current collector 2021, which is not coated with the second active material layer 2022 in a way symmetrical to the other surface, is referred to as a single-side-coated second electrode plate 202. For example, a section of the third surface 2021a is not coated with the second active material layer 2022, and the fourth surface 2021b symmetrical to the section is coated with the second active material layer 2022, and therefore, this section of the second current collector 2021 is a single-side-coated second electrode plate 202. A part of the third surface 2021a or the fourth surface 2021b of the second current collector 2021, which is coated with the second active material layer 2022 in a way symmetrical to the other surface, is referred to as a double-side-coated second electrode plate 202. In some embodiments, the single-side-coated second electrode plate 202 is typically disposed at the winding start layer and/or the winding end layer of the jelly-roll electrode assembly 20.

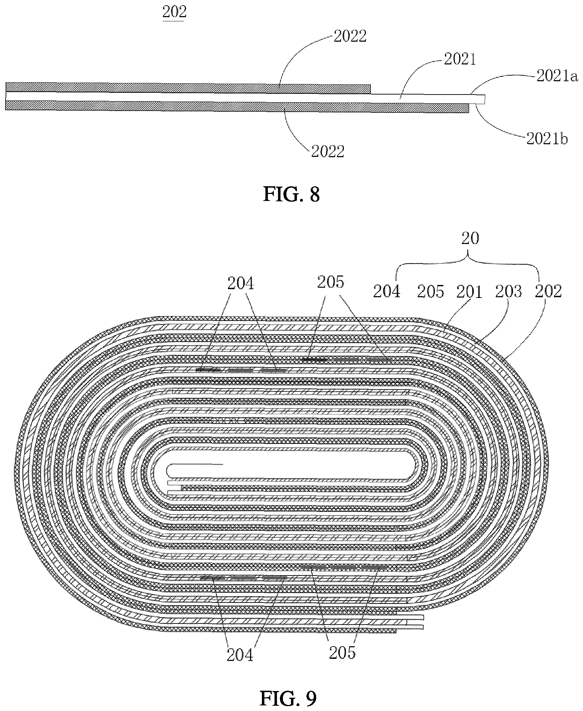

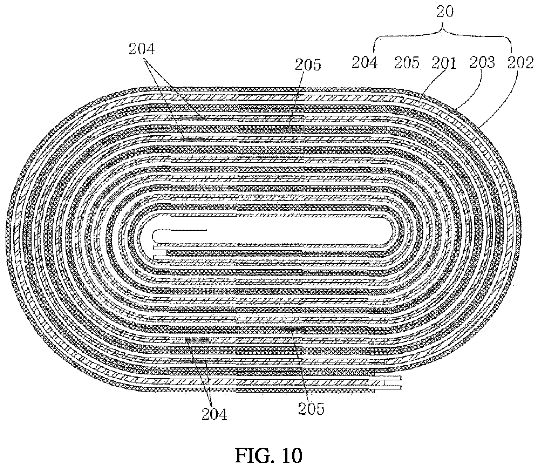

In some embodiments, as shown in FIG. 9 and FIG. 10, the second electrode plate 202 includes second inner layers (not shown) and second outer layers (not shown). The second inner layers include K layers starting from a start layer of the second electrode plate 202 along a direction from the start layer to an end layer of the second electrode plate 202. The second outer layers include L layers starting from the end layer of the second electrode plate 202 along a direction from the end layer to the start layer of the second electrode plate 202, where *L* ≥ 1, and K ≥ 3 .

In some embodiments, the second inner layers satisfy the following condition: 3 ≤ K ≤ 0.6*B*, where K is an integer, and *B* is the total number of layers of the second electrode plate 202. For example, when *B* = 15, 3 ≤ K ≤ 9 . In other words, in the direction from the start layer to the end layer of the second electrode plate 202, the second tab 205 is not disposed on at least 3 layers and at most 9 layers of the second electrode plate 202. If the value of K is equal to 5, then the second tab 205 is not disposed on the 1^{st} layer to the 5^{th} layer of the second electrode plate 202 in the direction from the start layer to the end layer of the second electrode plate 202.

In some embodiments, the second outer layers satisfy the following condition: 1 ≤ L ≤ 0.6*B*, where L is an integer, and *B* is the total number of layers of the second electrode plate 202. For example, when *B* = 15, 1 ≤ L ≤ 9. In other words, in the direction from the end layer to the start layer of the second electrode plate 202, the second tab 205 is not disposed on at least 1 layer and at most 9 layers of the second electrode plate 202. If the value of M is equal to 3, then the second tab 205 is not disposed on the 1^{st} layer (outermost layer) to the 3^{rd} layer of the second electrode plate 202 in the direction from the end layer to the start layer of the second electrode plate 202.

In some embodiments, the total number of layers *B* of the second electrode plate 202 is 5 to 80.

It is hereby noted that the electrode assembly in this embodiment is a jelly-roll structure. In defining the total number of layers *B* of the second electrode plate 202, a section from the first straight section unwound and located innermost in the electrode assembly to a midpoint of the first bend of the second electrode plate 202 is considered as a first fold of the second electrode plate and defined as a start layer of the second electrode plate 202; and, along the winding direction, a section from the midpoint of the first bend to the midpoint of the second bend is considered as a second fold of the second electrode plate and defined as a second layer of the second electrode plate. In other words, each bend formed by the second electrode plate 202 makes the total number of layers of the second electrode plate 202 increase by 1. For other layers, the arrangement is deduced similarly.

With respect to the plurality of first tabs 204, as shown in FIG. 1, the plurality of first tabs 204 are connected to a region other than the first inner layers and the first outer layers in the first electrode plate 201. By setting the distribution positions of the first tabs 204, the electromotive force at the first inner layers and the first outer layers of the first electrode plate 201 is reduced during charging and discharging of the electrochemical device, and the speed of lithiation at a local region is reduced, thereby alleviating lithium plating of the battery. Understandably, the polarity of the first tab 204 is closely related to the polarity of the first electrode plate 201, and is not particularly limited herein. For example, when the first electrode plate 201 is a negative electrode, the material of the first tab 204 may be a metal material such as copper or nickel.

In some embodiments, at least one first tab 204 is connected to each layer among the layers of the first electrode plate 201 other than the first inner layers and the first outer layers. Understandably, when the number of the first tabs 204 is one, the one first tab 204 may be disposed on any layer of the first electrode plate 201 other than the first inner layers and the first outer layers. When the number of the first tabs 204 is two or more, the arrangement of the two or more first tabs 204 on the first electrode plate 201 may be a continuous arrangement or a discrete arrangement, without being particularly limited herein.

In some embodiments, the number of first tabs 204 connected to each layer among the layers of the first electrode plate 201 other than the first inner layers and the first outer layers is not greater than 5. For example, the number of first tabs 204 connected to each layer may be 1, 2, 3, 4, or 5.

With respect to the plurality of second tabs 205, as shown in FIG. 1, the plurality of second tabs 205 are connected to a region other than the second inner layers and the second outer layers in the second electrode plate 202. By setting the distribution positions of the second tabs 205, the electromotive force at the second inner layers and the second outer layers of the second electrode plate 202 is reduced during charging and discharging of the electrochemical device, and the speed of lithiation at a local region is reduced, thereby alleviating lithium plating of the battery cell. Understandably, the polarity of the second tab 205 is closely related to the polarity of the second electrode plate 202, and is not particularly limited herein. For example, when the second electrode plate 202 is a positive electrode, the material of the second tab 205 may be a metal material such as aluminum.

In some embodiments, at least one second tab 205 is connected to each layer among the layers of the second electrode plate 202 other than the second inner layers and the second outer layers. Understandably, when the number of the second tabs 205 is one, the one second tab 205 may be disposed on any layer of the second electrode plate 202 other than the second inner layers and the second outer layers. When the number of the second tabs 205 is two or more, the arrangement of the two or more second tabs 205 on the second electrode plate 202 may be a continuous arrangement or an discrete arrangement, without being particularly limited herein.

In some embodiments, the number of second tabs 205 connected to each layer among the layers of the second electrode plate 202 other than the second inner layers and the second outer layers is not greater than 5. For example, the number of second tabs 205 connected to each layer may be 1, 2, 3, 4, or 5.

In addition, in order to facilitate readers to understand the technical effects brought by this technical solution, a comparative test is performed for some embodiments of this application, and a test of lithium plating of the negative electrode is described as an example. In the embodiments and comparative embodiments of this application, the lithium-ion battery is prepared by packaging an electrode assembly in an aluminum laminated film housing, and then injecting an electrolyte solution and sealing the housing, but the embodiments of this application are not limited to the example. The test process is as follows:

### Comparative Embodiment 1

The electrode assembly is formed by winding a positive electrode plate, a negative electrode plate, and a separator. After being wound, both the number of layers of the positive electrode plate and the number of layers of the negative electrode plate are 28. That is, *A* = 28, and *B* = 28. Therefore, 3 ≤ N ≤ 16, 1 ≤ M ≤ 16, 3 ≤ K ≤ 16, and 1 ≤ L ≤ 16. It is assumed that N = 3, M = 1, K = 3, and L = 1. The positive tab is disposed on the 2^{nd} to 26^{th} layers, the number of positive tabs on each layer is 1, the negative tab is disposed on the 2^{nd} to 28^{th} layers, the number of negative tabs on each layer is 1, and the ambient temperature is 25 °C. The battery is charged and then stands for 5 minutes, where the charging process is: 6C 4.2 V, 5C 4.32 V, and 3C 4.5 V. Subsequently, the battery is discharged and then stands for 5 minutes, where the discharging process is to discharge the battery at a current of 0.7C until the voltage reaches 3.0 V. Finally, the lithium plating status of the negative electrode is evaluated after the battery is fully charged and disassembled at the end of 300, 500, 700, 900, and 1100 cycles separately.

### Comparative Embodiment 2

The electrode assembly is formed by winding a positive electrode plate, a negative electrode plate, and a separator. After being wound, both the number of layers of the positive electrode plate and the number of layers of the negative electrode plate are 28. That is, *A* = 28, and *B* = 28. Therefore, 3 ≤ N ≤ 16, 1 ≤ M ≤ 16, 3 ≤ K ≤ 16, and 1 ≤ L ≤ 16. It is assumed that N = 3, M = 1, K = 3, and L = 1. The positive tab is disposed on the 4^{nd} to 28^{th} layers, the number of positive tabs on each layer is 1, the negative tab is disposed on the 4^{nd} to 28^{th} layers, the number of negative tabs on each layer is 1, and the ambient temperature is 25 °C. The battery is charged and then stands for 5 minutes, where the charging process is: 6C 4.2 V, 5C 4.32 V, and 3C 4.5 V. Subsequently, the battery is discharged and then stands for 5 minutes, where the discharging process is to discharge the battery at a current of 0.7C until the voltage reaches 3.0 V. Finally, the lithium plating status of the negative electrode is evaluated after the battery is fully charged and disassembled at the end of 300, 500, 700, 900, and 1100 cycles separately.

### Comparative Embodiment 3

The electrode assembly is formed by winding a positive electrode plate, a negative electrode plate, and a separator. After being wound, both the number of layers of the positive electrode plate and the number of layers of the negative electrode plate are 28. That is, *A* = 28, and *B* = 28. Therefore, 3 ≤ N ≤ 16, 1 ≤ M ≤ 16, 3 ≤ K ≤ 16, and 1 ≤ L ≤ 16. It is assumed that N = 3, M = 1, K = 3, and L = 1. The positive tab is disposed on the 2^{nd} to 24^{th} layers, the number of positive tabs on each layer is 1, the negative tab is disposed on the 2^{nd} to 24^{th} layers, the number of negative tabs on each layer is 1, and the ambient temperature is 25 °C. The battery is charged and then stands for 5 minutes, where the charging process is: 6C 4.2 V, 5C 4.32 V, and 3C 4.5 V. Subsequently, the battery is discharged and then stands for 5 minutes, where the discharging process is to discharge the battery at a current of 0.7C until the voltage reaches 3.0 V. Finally, the lithium plating status of the negative electrode is evaluated after the battery is fully charged and disassembled at the end of 300, 500, 700, 900, and 1100 cycles separately.

### Comparative Embodiment 4

The electrode assembly is formed by winding a positive electrode plate, a negative electrode plate, and a separator. After being wound, both the number of layers of the positive electrode plate and the number of layers of the negative electrode plate are 28. That is, *A* = 28, and *B* = 28. Therefore, 3 ≤ N ≤ 16, 1 ≤ M ≤ 16, 3 ≤ K ≤ 16, and 1 ≤ L ≤ 16. It is assumed that N = 3, M = 1, K = 3, and L = 1. The positive tab is disposed on the 2^{nd} to 9^{th} layers, the number of positive tabs on each layer is 1, the negative tab is disposed on the 2^{nd} to 9^{th} layers, the number of negative tabs on each layer is 1, and the ambient temperature is 25 °C. The battery is charged and then stands for 5 minutes, where the charging process is: 6C 4.2 V, 5C 4.32 V, and 3C 4.5 V. Subsequently, the battery is discharged and then stands for 5 minutes, where the discharging process is to discharge the battery at a current of 0.7C until the voltage reaches 3.0 V. Finally, the lithium plating status of the negative electrode is evaluated after the battery is fully charged and disassembled at the end of 300, 500, 700, 900, and 1100 cycles separately.

### Comparative Embodiment 5

The electrode assembly is formed by winding a positive electrode plate, a negative electrode plate, and a separator. After being wound, both the number of layers of the positive electrode plate and the number of layers of the negative electrode plate are 28. That is, *A* = 28, and *B* = 28. Therefore, 3 ≤ N ≤ 16, 1 ≤ M ≤ 16, 3 ≤ K ≤ 16, and 1 ≤ L ≤ 16. It is assumed that N = 3, M = 1, K = 3, and L = 1. The positive tab is disposed on the 21^{nd} to 28^{th} layers, the number of positive tabs on each layer is 1, the negative tab is disposed on the 21^{nd} to 28^{th} layers, the number of negative tabs on each layer is 1, and the ambient temperature is 25 °C. The battery is charged and then stands for 5 minutes, where the charging process is: 6C 4.2 V, 5C 4.32 V, and 3C 4.5 V. Subsequently, the battery is discharged and then stands for 5 minutes, where the discharging process is to discharge the battery at a current of 0.7C until the voltage reaches 3.0 V. Finally, the lithium plating status of the negative electrode is evaluated after the battery is fully charged and disassembled at the end of 300, 500, 700, 900, and 1100 cycles separately.

### Embodiment 1

The electrode assembly is formed by winding a positive electrode plate, a negative electrode plate, and a separator. After being wound, both the number of layers of the positive electrode plate and the number of layers of the negative electrode plate are 28. That is, *A* = 28, and *B* = 28. Therefore, 3 ≤ N ≤ 16, 1 ≤ M ≤ 16, 3 ≤ K ≤ 16, and 1 ≤ L ≤ 16. It is assumed that N = 3, M = 1, K = 3, and L = 1. The positive tab is disposed on the 10^{th} to 18^{th} layers, the number of positive tabs on each layer is 1, the negative tab is disposed on the 10^{th} to 18^{th} layers, the number of negative tabs on each layer is 1, and the ambient temperature is 25 °C. The battery is charged and then stands for 5 minutes, where the charging process is: 6C 4.2 V, 5C 4.32 V, and 3C 4.5 V. Subsequently, the battery is discharged and then stands for 5 minutes, where the discharging process is to discharge the battery at a current of 0.7C until the voltage reaches 3.0 V. Finally, the lithium plating status of the negative electrode is evaluated after the battery is fully charged and disassembled at the end of 300, 500, 700, 900, and 1100 cycles separately.

### Embodiment 2

The electrode assembly is formed by winding a positive electrode plate, a negative electrode plate, and a separator. After being wound, both the number of layers of the positive electrode plate and the number of layers of the negative electrode plate are 28. That is, *A* = 28, and *B* = 28. Therefore, 3 ≤ N ≤ 16, 1 ≤ M ≤ 16, 3 ≤ K ≤ 16, and 1 ≤ L ≤ 16. It is assumed that N = 3, M = 1, K = 3, and L = 1. The positive tab is disposed on the 10^{th} to 18^{th} layers, the number of positive tabs on each layer is 3, the negative tab is disposed on the 10^{th} to 18^{th} layers, the number of negative tabs on each layer is 3, and the ambient temperature is 25 °C. The battery is charged and then stands for 5 minutes, where the charging process is: 6C 4.2 V, 5C 4.32 V, and 3C 4.5 V. Subsequently, the battery is discharged and then stands for 5 minutes, where the discharging process is to discharge the battery at a current of 0.7C until the voltage reaches 3.0 V. Finally, the lithium plating status of the negative electrode is evaluated after the battery is fully charged and disassembled at the end of 300, 500, 700, 900, and 1100 cycles separately.

### Embodiment 3

The electrode assembly is formed by winding a positive electrode plate, a negative electrode plate, and a separator. After being wound, both the number of layers of the positive electrode plate and the number of layers of the negative electrode plate are 28. That is, *A* = 28, and *B* = 28. Therefore, 3 ≤ N ≤ 16, 1 ≤ M ≤ 16, 3 ≤ K ≤ 16, and 1 ≤ L ≤ 16. It is assumed that N = 3, M = 1, K = 3, and L = 1. The positive tab is disposed on the 6^{th} to 22^{th} layers, the number of positive tabs on each layer is 1, the negative tab is disposed on the 6^{th} to 22^{th} layers, the number of negative tabs on each layer is 1, and the ambient temperature is 25 °C. The battery is charged and then stands for 5 minutes, where the charging process is: 6C 4.2 V, 5C 4.32 V, and 3C 4.5 V. Subsequently, the battery is discharged and then stands for 5 minutes, where the discharging process is to discharge the battery at a current of 0.7C until the voltage reaches 3.0 V. Finally, the lithium plating status of the negative electrode is evaluated after the battery is fully charged and disassembled at the end of 300, 500, 700, 900, and 1100 cycles separately.

### Embodiment 4

The electrode assembly is formed by winding a positive electrode plate, a negative electrode plate, and a separator. After being wound, both the number of layers of the positive electrode plate and the number of layers of the negative electrode plate are 28. That is, *A* = 28, and *B* = 28. Therefore, 3 ≤ N ≤ 16, 1 ≤ M ≤ 16, 3 ≤ K ≤ 16, and 1 ≤ L ≤ 16. It is assumed that N = 3, M = 1, K = 3, and L = 1. The positive tab is disposed on the 6^{th} to 22^{nd} layers, the number of positive tabs on each layer is 1, the negative tab is disposed on the 10^{th} to 18^{th} layers, the number of negative tabs on each layer is 1, and the ambient temperature is 25 °C. The battery is charged and then stands for 5 minutes, where the charging process is: 6C 4.2 V, 5C 4.32 V, and 3C 4.5 V. Subsequently, the battery is discharged and then stands for 5 minutes, where the discharging process is to discharge the battery at a current of 0.7C until the voltage reaches 3.0 V. Finally, the lithium plating status of the negative electrode is evaluated after the battery is fully charged and disassembled at the end of 300, 500, 700, 900, and 1100 cycles separately.

### Embodiment 5

The electrode assembly is formed by winding a positive electrode plate, a negative electrode plate, and a separator. After being wound, both the number of layers of the positive electrode plate and the number of layers of the negative electrode plate are 28. That is, *A* = 28, and *B* = 28. Therefore, 3 ≤ N ≤ 16, 1 ≤ M ≤ 16, 3 ≤ K ≤ 16, and 1 ≤ L ≤ 16. It is assumed that N = 3, M = 1, K = 3, and L = 1. The positive tab is disposed on the 10^{th} to 18^{nd} layers, the number of positive tabs on each layer is 1, the negative tab is disposed on the 6^{th} to 22^{th} layers, the number of negative tabs on each layer is 1, and the ambient temperature is 25 °C. The battery is charged and then stands for 5 minutes, where the charging process is: 6C 4.2 V, 5C 4.32 V, and 3C 4.5 V. Subsequently, the battery is discharged and then stands for 5 minutes, where the discharging process is to discharge the battery at a current of 0.7C until the voltage reaches 3.0 V. Finally, the lithium plating status of the negative electrode is evaluated after the battery is fully charged and disassembled at the end of 300, 500, 700, 900, and 1100 cycles separately.

### Embodiment 6

The electrode assembly is formed by winding a positive electrode plate, a negative electrode plate, and a separator. After being wound, both the number of layers of the positive electrode plate and the number of layers of the negative electrode plate are 28. That is, *A* = 28, and *B* = 28. Therefore, 3 ≤ N ≤ 16, 1 ≤ M ≤ 16, 3 ≤ K ≤ 16, and 1 ≤ L ≤ 16. It is assumed that N = 3, M = 1, K = 3, and L = 1. The positive tab is disposed on the 10^{th} to 17^{nd} layers, the number of positive tabs on each layer is 1, the negative tab is disposed on the 10^{th} to 17^{th} layers, the number of negative tabs on each layer is 1, and the ambient temperature is 25 °C. The battery is charged and then stands for 5 minutes, where the charging process is: 6C 4.2 V, 5C 4.32 V, and 3C 4.5 V. Subsequently, the battery is discharged and then stands for 5 minutes, where the discharging process is to discharge the battery at a current of 0.7C until the voltage reaches 3.0 V. Finally, the lithium plating status of the negative electrode is evaluated after the battery is fully charged and disassembled at the end of 300, 500, 700, 900, and 1100 cycles separately.

### Embodiment 7

The electrode assembly is formed by winding a positive electrode plate, a negative electrode plate, and a separator. After being wound, both the number of layers of the positive electrode plate and the number of layers of the negative electrode plate are 28. That is, *A* = 28, and *B* = 28. Therefore, 3 ≤ N ≤ 16, 1 ≤ M ≤ 16, 3 ≤ K ≤ 16, and 1 ≤ L ≤ 16. It is assumed that N = 3, M = 1, K = 3, and L = 1. The positive tab is disposed on the 14^{th} to 21^{nd} layers, the number of positive tabs on each layer is 1, the negative tab is disposed on the 14^{th} to 21^{th} layers, the number of negative tabs on each layer is 1, and the ambient temperature is 25 °C. The battery is charged and then stands for 5 minutes, where the charging process is: 6C 4.2 V, 5C 4.32 V, and 3C 4.5 V. Subsequently, the battery is discharged and then stands for 5 minutes, where the discharging process is to discharge the battery at a current of 0.7C until the voltage reaches 3.0 V. Finally, the lithium plating status of the negative electrode is evaluated after the battery is fully charged and disassembled at the end of 300, 500, 700, 900, and 1100 cycles separately.

### Embodiment 8

The electrode assembly is formed by winding a positive electrode plate, a negative electrode plate, and a separator. After being wound, both the number of layers of the positive electrode plate and the number of layers of the negative electrode plate are 28. That is, *A* = 28, and *B* = 28. Therefore, 3 ≤ N ≤ 16, 1 ≤ M ≤ 16, 3 ≤ K ≤ 16, and 1 ≤ L ≤ 16. It is assumed that N = 3, M = 1, K = 3, and L = 1. The positive tab is disposed on the 4^{th} to 27^{nd} layers, the number of positive tabs on each layer is 1, the negative tab is disposed on the 4^{th} to 27^{th} layers, the number of negative tabs on each layer is 1, and the ambient temperature is 25 °C. The battery is charged and then stands for 5 minutes, where the charging process is: 6C 4.2 V, 5C 4.32 V, and 3C 4.5 V. Subsequently, the battery is discharged and then stands for 5 minutes, where the discharging process is to discharge the battery at a current of 0.7C until the voltage reaches 3.0 V. Finally, the lithium plating status of the negative electrode is evaluated after the battery is fully charged and disassembled at the end of 300, 500, 700, 900, and 1100 cycles separately.

### Embodiment 9

The electrode assembly is formed by winding a positive electrode plate, a negative electrode plate, and a separator. After being wound, both the number of layers of the positive electrode plate and the number of layers of the negative electrode plate are 28. That is, *A* = 28, and *B* = 28. Therefore, 3 ≤ N ≤ 16, 1 ≤ M ≤ 16, 3 ≤ K ≤ 16, and 1 ≤ L ≤ 16. It is assumed that N = 3, M = 1, K = 3, and L = 1. The positive tab is disposed on the 4^{th} to 27^{th} layers, the number of positive tabs on each layer is 1, the negative tab is disposed on the 10^{th} to 18^{th} layers, the number of negative tabs on each layer is 1, and the ambient temperature is 25 °C. The battery is charged and then stands for 5 minutes, where the charging process is: 6C 4.2 V, 5C 4.32 V, and 3C 4.5 V. Subsequently, the battery is discharged and then stands for 5 minutes, where the discharging process is to discharge the battery at a current of 0.7C until the voltage reaches 3.0 V. Finally, the lithium plating status of the negative electrode is evaluated after the battery is fully charged and disassembled at the end of 300, 500, 700, 900, and 1100 cycles separately.

The test results are shown in the following table:

| | Tab design | | | | Lithium plating status at head and end of disassembled negative electrode | | | | |
|---|---|---|---|---|---|---|---|---|---|
| | Layers on which the positive tab is located | Number of positive tabs on each layer | Layers on which the negative tab is located | Number of negative tabs on each layer | Disassembled at the end of 300 cycles | Disassembled at the end of 500 cycles | Disassembled at the end of 700 cycles | Disassembled at the end of 900 cycles | Disassembled at the end of 1100 cycles |
| Comparative Embodiment 1 | 2 to 26 | 1 | 2 to 28 | 1 | No lithium plating | No lithium plating | Slight lithium plating | Medium-level lithium plating | Medium-level lithium plating |
| Comparative Embodiment 2 | 4 to 28 | 1 | 4 to 28 | 1 | No lithium plating | No lithium plating | Slight lithium plating | Slight lithium plating | Medium-level lithium plating |
| Comparative Embodiment 3 | 2 to 24 | 1 | 2 to 24 | 1 | No lithium plating | No lithium plating | Slight lithium plating | Slight lithium plating | Medium-level lithium plating |
| Comparative Embodiment 4 | 2 to 9 | 1 | 2 to 9 | 1 | No lithium plating | Slight lithium plating | Slight lithium plating | Medium-level lithium plating | Severe lithium plating |
| Comparative Embodiment 5 | 21 to 28 | 1 | 21 to 28 | 1 | No lithium plating | Slight lithium plating | Slight lithium plating | Medium-level lithium plating | Severe lithium plating |
| Embodiment 1 | 10 to 18 | 1 | 10 to 18 | 1 | No lithium plating | No lithium plating | No lithium plating | No lithium plating | Slight lithium plating |
| Embodiment 2 | 10 to 18 | 3 | 10 to 18 | 3 | No lithium plating | No lithium plating | No lithium plating | No lithium plating | Slight lithium plating |
| Embodiment 3 | 6 to 22 | 1 | 6 to 22 | 1 | No lithium plating | No lithium plating | No lithium plating | Slight lithium plating | Medium-level lithium plating |
| Embodiment 4 | 6 to 22 | 1 | 10 to 18 | 1 | No lithium plating | No lithium plating | No lithium plating | Slight lithium plating | Slight lithium plating |
| Embodiment 5 | 10 to 18 | 1 | 6 to 22 | 1 | No lithium plating | No lithium plating | No lithium plating | Slight lithium plating | Slight lithium plating |
| Embodiment 6 | 10 to 17 | 1 | 10 to 17 | 1 | No lithium plating | No lithium plating | No lithium plating | No lithium plating | Slight lithium plating |
| Embodiment 7 | 14 to 21 | 1 | 14 to 21 | 1 | No lithium plating | No lithium plating | No lithium plating | No lithium plating | Slight lithium plating |
| Embodiment 8 | 4 to 27 | 1 | 4 to 27 | 1 | No lithium plating | No lithium plating | No lithium plating | Slight lithium plating | Medium-level lithium plating |
| Embodiment 9 | 4 to 27 | 1 | 10 to 18 | 1 | No lithium plating | No lithium plating | No lithium plating | Slight lithium plating | Medium-level lithium plating |

As can be seen from the test data in the table, in Comparative Embodiments 1 to 5, when the battery has been charged and discharged for 500 or 700 cycles, slight lithium plating occurs. However, in Embodiments 1 to 9, when the battery has been charged and discharged for 500 or 700 cycles, no lithium plating occurs, indicating that Embodiments 1 to 9 are favorable for alleviating lithium plating in contrast to Comparative Embodiments 1 to 5 when the battery has been charged and discharged for 300 to 500 cycles. In Comparative Embodiments 1 to 5, when the battery has been charged and discharged for 900 cycles, slight lithium plating or a medium level of lithium plating occurs. In Embodiments 1, 2, and 7, when the battery has been charged and discharged for 900 cycles, no lithium plating occurs, indicating that the technical solutions of such embodiments can alleviate lithium plating when the battery has been charged and discharged for 900 cycles.

In some embodiments of this application, an electrode assembly and a plurality of first tabs are disposed. The electrode assembly includes a first electrode plate, a second electrode plate, and a separator. The separator is disposed between the first electrode plate and the second electrode plate. The first electrode plate, the separator, and the second electrode plate are stacked and wound. In addition, One end of the plurality of first tabs is connected to a region of the first electrode plate other than first inner layers and first outer layers. The first inner layers include N layers starting from a start layer of the first electrode plate along a direction from the start layer to an end layer of the first electrode plate; and the first outer layers include M layers starting from the end layer of the first electrode plate along a direction from the end layer to the start layer of the first electrode plate, where M ≥ 1, and N ≥ 3By setting the distribution positions of the plurality of first tabs, the electromotive force at the first inner layers and the first outer layers of the first electrode plate is reduced during charging and discharging of the electrochemical device, and the speed of lithiation at a local region is reduced, thereby alleviating lithium plating of the battery.

This application further provides an embodiment of a battery module. The battery module includes the electrochemical device disclosed above. The functionality and structure of the electrochemical device may be learned by referring to the above embodiments, the details of which are omitted herein.

This application further provides an embodiment of an electrical device. The electrical device includes the battery module disclosed above. The functionality and structure of the battery module may be learned by referring to the above embodiment, the details of which are omitted herein.

What is described above is merely some embodiments of this application, and does not limit the patent scope of this application in any way. All equivalent structural variations and equivalent process variations made by using the content of the specification and the drawings of this application, and the content hereof used directly or indirectly in other related technical fields, still fall within the patent protection scope of this application.

## Claims

1. An electrochemical device, comprising an electrode assembly, wherein the electrode assembly comprises a first electrode plate, a second electrode plate, and a separator; the separator is disposed between the first electrode plate and the second electrode plate; and the first electrode plate, the separator, and the second electrode plate are stacked and wound, **characterized in that** a plurality of first tabs are disposed on the first electrode plate, and the plurality of first tabs are connected to a region of the first electrode plate other than first inner layers and first outer layers, the first inner layers comprise N layers starting from a start layer of the first electrode plate along a direction from the start layer to an end layer of the first electrode plate, and the first outer layers comprise M layers starting from the end layer of the first electrode plate along a direction from the end layer to the start layer of the first electrode plate, wherein M ≥ 1, and N ≥ 3.

2. The electrochemical device according to claim 1, **characterized in that**
the first electrode plate comprises a first current collector, the plurality of first tabs are formed by extending the first current collector from one side, and the plurality of first tabs and the first current collector are formed in one piece.

3. The electrochemical device according to claim 1, **characterized in that**
a plurality of second tabs are disposed on the second electrode plate, and the plurality of second tabs are connected to a region of the second electrode plate other than second inner layers and second outer layers, the second inner layers comprise K layers starting from a start layer of the second electrode plate along a direction from the start layer to an end layer of the second electrode plate, and the second outer layers comprise L layers starting from the end layer of the second electrode plate along a direction from the end layer to the start layer of the second electrode plate, wherein L ≥ 1, and K ≥ 3.

4. The electrochemical device according to claim 3, **characterized in that**
the second electrode plate comprises a second current collector, the plurality of second tabs are formed by extending the second current collector from one side, and the plurality of second tabs and the second current collector are formed in one piece.

5. The electrochemical device according to claim 1, **characterized in that** the first inner layers satisfy the following condition: 3 ≤ N ≤ 0.6*A*, wherein N is an integer, and *A* is a total number of layers of the first electrode plate.

6. The electrochemical device according to claim 1, **characterized in that** the first outer layers satisfy the following condition: 1 ≤ M ≤ 0.6*A*, wherein M is an integer, and *A* is a total number of layers of the first electrode plate.

7. The electrochemical device according to claim 1, **characterized in that** at least one first tab is connected to each layer among the layers of the first electrode plate other than the first inner layers and the first outer layers.

8. The electrochemical device according to claim 7, **characterized in that** a number of first tabs connected to each layer among the layers of the first electrode plate other than the first inner layers and the first outer layers is not greater than 5.

9. The electrochemical device according to any one of claims 1 to 8, **characterized in that**
a total number of layers A of the first electrode plate is 5 to 80.

10. The battery cell according to claim 3, **characterized in that** the second inner layers satisfy the following condition: 3 ≤ K ≤ 0.6*B*, wherein K is an integer, and *B* is a total number of layers of the second electrode plate.

11. The electrochemical device according to claim 1, **characterized in that** the first outer layers satisfy the following condition: 1 ≤ L ≤ 0.6*B*, wherein L is an integer, and *B* is a total number of layers of the second electrode plate.

12. The electrochemical device according to claim 1, **characterized in that** at least one second tab is connected to each layer among the layers of the second electrode plate other than the second inner layers and the second outer layers.

13. The electrochemical device according to claim 12, **characterized in that** a number of second tabs connected to each layer among the layers of the second electrode plate other than the second inner layers and the second outer layers is not greater than 5.

14. The electrochemical device according to any one of claims 10 to 13, **characterized in that**
a total number of layers B of the second electrode plate is 5 to 80.

15. A battery module, **characterized in that** the battery module comprises the electrochemical device according to any one of claims 1 to 14.

16. An electrical device, **characterized in that** the electrical device comprises the battery module according to claim 15.
